# EUROPEAN PATENT SPECIFICATION

(11) **EP 2 274 199 B1**
(45) Date of publication and mention of the grant of the patent: **24.04.2013**
(21) Application number: 09746253.5
(22) Date of filing: 13.05.2009
(51) Int. Cl.: A63B 33/00, G02C 7/08, A62B 18/08

(54) **DIVING MASK FOR UNDERWATER AND AIR VISION**
TAUCHMASK ZUR VERWENDUNG UNTER UND ÜBER WASSER
MASQUE DE PLONGEE POUR VISION DANS L'AIR ET DANS L'EAU

(30) Priority: 13.05.2008 IT FI20080093
(43) Date of publication of application: 19.01.2011
(73) Proprietor: Consiglio Nazionale Delle Ricerche - Istituto Nazionale Ottica Applicata, 50125 Firenze Arcetri (IT)
(72) Inventor: FONTANI, Daniela, I-50125 Firenze Arcetri (IT); FRANCINI, Franco, I-50125 Firenze Arcetri (IT); JAFRANCESCO, David, I-50125 Firenze Arcetri (IT); MERCATELLI, Luca, I-50125 Firenze Arcetri (IT); SANSONI, Paola, I-50125 Firenze Arcetri (IT)
(74) Representative: Leone, Mario
(86) International application number: PCT/IB2009/051985
(87) International publication number: WO 2009/138959

(56) References cited:
- DE-A1- 4 141 364
- DE-A1- 10 148 591
- US-A- 3 040 616
- US-A- 4 373 788

## Description

### Background of the Invention

### 1. Field of the Invention

The present invention is related to a diving mask or goggles for both underwater and air vision, apt to be worn by a user, particularly but not exclusively for practicing breath-held diving, deep diving and any other activity where a mask is applied to a user's face to allow the submerged vision but also the air vision without removing the mask.

### 2. Description of the prior art

The conventional masks for scuba diving have a flat front glass mounted into a frame shaped so as to be water tightly applied to a diver's face and enclosing an air volume at diver's eyes.

In the simplest models, the diver is allowed to have a correct vision through said air volume and through the glass, and the air vision is almost immediately restored when the diver's head emerges from the water surface. However, in the diving the water pressure exerts on the mask a force proportional to the depth. Such a force, not balanced by the atmospheric pressure inside the mask volume, is transmitted to the diver's face, creating a considerable discomfort, pain and even capillary vessel ruptures as well with the increase of the diving depth.

To prevent any damage from the pressure increase, the diver usually compensates the pressure inside the mask by exhaling air into the mask volume from the nose or the mouth. This solution might be regarded as sufficient in the aqualung diving, wherein the diver might spend some air for this purpose.

In apnea diving, the diver often does not have any chance to use the lung air in the above described way. Moreover, this solution cannot be applied to goggles covering only the diver's eyes.

For these reasons, a new concept of floodable mask has been developed, wherein the inner volume contacting the diver's eyes is essentially flooded, i.e. filled by a suitable liquid, namely physiological solution, fresh water, sea water. The liquid is basically incompressible; hence the external water pressure has no effect on the mask inner volume and on the diver's visage.

The document US 3040616, which is considered to be the closest prior art, discloses a goggle with these features.

However, in view of the different refractive index between air and water, the diver's vision is consequently altered, but such an optical effect is compensated by a suitable optical system placed either inside the mask volume, at the diver's eyes, or at the mask glass. This optical system may include one or more converging lenses for each eye, embedded into the glass or internally fixed to the glass surface.

In this way, during the immersion, the diver's vision is correct and the external pressure is compensated e.g. by the physiological liquid over the whole surface of the visage covered by the mask, thus avoiding the mentioned drawbacks. Nevertheless, at re-emersion, the corrective lenses completely inhibit the normal vision in air. Such a hindrance may cause relevant difficulties in diver's orientation to locate, for instance, the other divers, a support buoy or an incumbent danger.

Removing the mask when emerging from the water may not be put into practice for the necessity of having the mask volume flooded at the next plunge, and represents a serious drawback especially for free divers, which repeatedly immerge and re-emerge themselves.

### Summary of the Invention

The technical problem lying at the root of the present invention is providing a diving mask preventing the drawbacks mentioned with reference to the prior art.

Such a problem is solved by a diving mask apt to be worn at user's eyes and defining an inner volume which, when in use, contains a suitable liquid to compensate the external pressure, comprising:
- a first converging optical system to compensate the refractive effect of said suitable liquid inside said inner volume; and
- a second optical system, placed at said first optical system, having a refractive index substantially corresponding to that of said liquid so as to be neutral when immersed, but having a diverging effect in air, so as to compensate in air the converging effect of said first converging optical system.

In a preferred embodiment, said first optical system comprises one converging lens for each eye, possibly in a goggle arrangement, advantageously made of a high refractive index optical polymer, so as to the reduce the thickness of the lenses.

Said second optical system may include a diverging lens for each eye, placed in front of the corresponding lenses of the first optical system. Each of the lenses of the second optical system can be carried out by two meniscuses, i.e. by two concave or flat, thin and transparent walls defining, together with suitable peripheral walls, a further volume apt to be filled by water, i.e. the liquid wherethrough the diver is plunged. In this way, the overall shape of the volume encased by said meniscuses and filled with water can create a diverging refractive effect compensating the converging effect of the first optical system.

In a further preferred embodiment, said second optical system is provided with means for flooding the volume determined by said two meniscuses. Such means for flooding can comprise holes located at said peripheral walls. The arrangement and the size of these holes, or even a single hole, can be designed so as to allow the flooding of said volume when the mask is simply plunged in the water, but preventing the emptying thereof when the mask is emerged. This effect may be achieved by simply placing said hole or holes at the upper portion of the rim embodying said peripheral wall. Otherwise, the hole or the holes placed at the bottom portion of the rim may operate as a check valve so as to allow the flooding but avoiding the emptying. This operation may be realized by adding a suitable lip at the bottom holes; in this way the meniscus volume may be flooded through the bottom holes so as to allow the air emission from the upper holes and, when emerged, the water is kept inside the meniscus volume in spite of gravity.

In an alternative embodiment of the invention, the diverging lens may be achieved by filling and sealing the space between said two meniscuses, of a liquid or other material (e.g. a silica based gel) having a refractive index corresponding to water index in the wavelenght range of the incident light.

According to the invention, the second optical system comprises a chamber apt to be flooded when the mask is plunged and apt to be emptied when the mask is emerged. The task of this chamber is to separe the converging optical system and the diverging lenses of the second optical system, introducing a double light refractive deflection when the chamber is empty.

It is undertstood that such a chamber may be realised by any kind of space or gap between said two lens kinds. In particular, the chamber can be defined, at opposite sides, by the lenses of the first optical system and by the meniscus of the second optical system facing the first optical system. The peripheral wall of this chamber, joining the two optical systems, can be provided with several holes so as to ease the passage of water and air therethrough.

Therefore, when the mask is plunged, the inner volume of the chamber is filled with a suitably water-based liquid, preferably physiological solution, and both the meniscus volume and the above chamber are flooded by water. In this configuration, only the first optical system actually works to compensate the refractive effect of the water to each diver's eye.

When the mask is emerged, the volume between the meniscuses remains filled with water, but the separation chamber is emptied thus activating the second optical system which compensates, in air, the optical power of the first one.

Accordingly, the diver is allowed to have a correct vision underwater, but in air the mask gets back almost instantaneously the power of providing said correct vision.

In the above embodiments, for each eye at least one converging lens and a floodable diverging optical assembly are provided, with two different separating chambers therebetween in a substantial goggle arrangement wherein each eye contacts a respective volume filled with a suitable solution. Otherwise, said converging lenses and meniscuses may be formed in respective transparent plates or glasses as well, across the whole width of the mask, possibly with common volumes and chambers formed therein.

In the above preferred embodiments, it is understood that the optical components are aligned along the optical axis of vision of each eye. Preferably but not exclusively, the order followed by these components from the eye is: converging lens, first floodable/emptiable chamber, diverging assembly.

Further embodiments may include means for filling the eye volumes with a suitable liquid, e.g. by injection of physiological solution and corresponding emission of the inner. A simplified embodiment may comprise peripheral holes at the inner eye volume so as to allow the flooding thereof, substantially as described in connection with the second optical system.

It is intended that the mask as such, i.e. the arrangement of converging optical system, floodable diverging optical systems and floodable/emptiable separating chambers may be coupled to optical devices operated both underwater and in air, e.g. a camera or the like.

Therefore, th invention can be understood as referred to an optical assembly wherein the intended user or user's eyes are replaced b any kind of optical device which need to be provided with a correct vision both immersed in a liquid and in air, i.e. in a two different media having a different refractive index.

This assembly, in accordance with the mask definition, comprises a first converging optical system to compensate the refractive effect produced at the immersion at the optical device. For instance, this first system may be a converging lens placed in front of the device, with the ommersion liquid free to flow and fill the gap between devce and converging lens.

Then, the assembly comprises a second optical system, placed at said first optical system, having a refractive index substantially corresponding to that of said liquid so as to be neutral when immersed, but having a diverging effect when not immersed, so as to compensate the converging effect of said first converging optical system.

The assembly as set forth above and the diving mask, i.e. the particular application in the filed of scuba diving, may be seen as equivalent in any other aspect.

Furthermore, it is understood that the present invention is not limited either by the light wavelength for which the mask is designed or by the kind of liquid in which the mask should be plunged.

### Brief Description of the Drawings

Figure 1 is a perspective view of an embodiment of a diving mask according the present invention; and
Figure 2 is a longitudinal section view taken according to a plane II-II in Figure 1, showing the mask of figure 1 through the optical axis of eye vision.

### Description of one Embodiment of the Invention

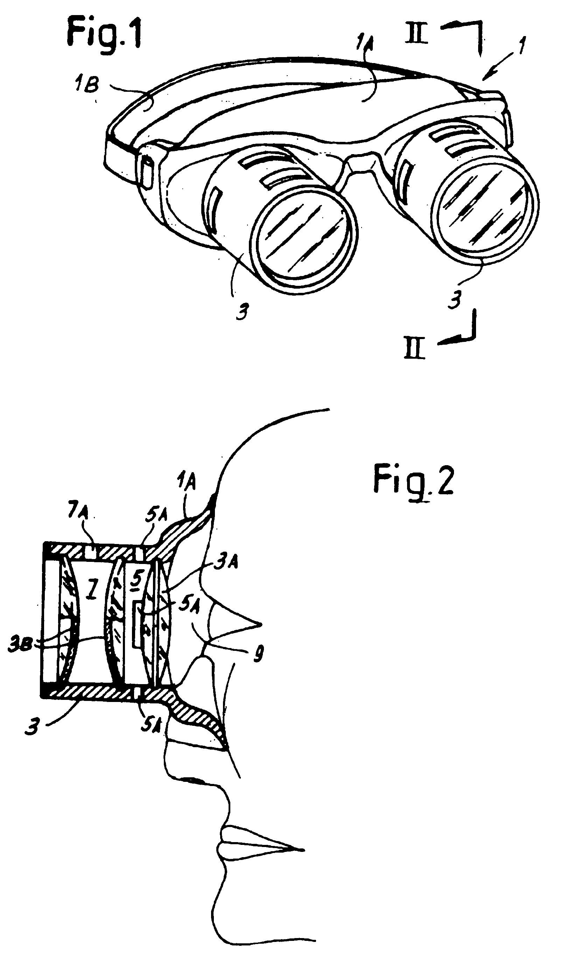

With reference to Figure 1, a diver mask according to the present invention is generally indicated by 1. It has a frontal frame 1A that is shaped to be applied to a user's face at the eyes thereof by means of an elastic drawstring 1B.

The frame 1A frontally holds, at each user's eye, a telescope structure 3, including a converging lens, particularly a biconvex lens 3A, and two adjacent meniscuses 3B, each having a constant and minimal thickness. A first chamber is thereby formed between the converging lens 3A and the set of meniscuses 3B, namely the meniscus facing the converging lens 3A.

At the periphery of said chamber, i.e. through the wall of the telescope structure 3 joining the biconvex lens 3A and the meniscuses 3B, first passing-through holes 5A are formed, preferably slit-shaped apertures extending along said peripheral joining wall.

Such first holes 5A put the chamber space between lens 3A and meniscuses 3B and the external environment into hydraulic communication. In other words, the size of the apertures and the overall extension thereof allow both the water and the air to flow through them, flooding and emptying the chamber when the mask 1 is plunged and emerged.

A second chamber 7 is defined by the volume enclosed between the meniscuses 3B and by the corresponding peripheral wall portion of the telescope structure 3. The resulting volume is provided, in the present embodiment, with a single upper and slit-shaped aperture 7A, formed at the top surface of the telescope structure 3 and having a passing-through section allowing the water to enter into the chamber 7 and, at the same time, the air to be expelled by the water pressure.

Once the mask is plunged and the second chamber is completely flooded by water, the particular concave shape of the meniscuses 3B creates a diverging lens between each pair of meniscuses 3B.

It is easily understood that the above converging lenses 3A may have a plane-convex shape, and that preferably both the meniscuses are concave, but possibly one of them may be flat.

The assembly of the lenses 3A embodies a first converging optical system of the mask according to the present embodiment, designed to compensate the refractive effect of a liquid inside an inner volume 9 of the mask 1, i.e. the space defined, when the mask is worn, by the user's visage, the mask frame 1A and the converging lenses 3A.

The above mentioned meniscuses 3B and the chamber 5, both possibly filled with water when immersed, embody a second optical system of the mask according to the present embodiment, placed at said first optical system.

Since that volume of the meiniscuses and the chamber are filled with water, the second optical system has a refractive index substantially corresponding to the of said liquid wherein the mask is plunged, so as to be neutral when immersed, but having a diverging effect in air, so as to compensate in air the converging effect of said first converging optical system.

Such a diverging effect is created by a double deflection of the light: through the diverging lens and passing from the chamber to the converging lens.

In a preferred embodiment, said first optical system comprises one converging lens for each eye, possibly in a goggle arrangement shown in Figure 1.

Advantageously, the lenses 3A are made of a high refractive index optical material such as a polymer or a particular glass, so as to the reduce the thickness of the lenses. Preferably, said material is a polymer and such high refractive index is greater than 1,6 and possibly greater than 1,7 - so as to reduce the overall thickness of this optical system and/or increase the extension of the converging lenses.

Said upper aperture 7A operates as means for flooding the volume determined by said two meniscuses 3A. Further, said holes 5A operate as means for flooding and emptying the volume of said first chamber 5.

It is intended that the vlume between the meniscuses may be filled in the manufacturing process with a suitable material, i.e. water or any other liquid or gel material, i.e. a silica based gel, all having a refractive index corresponding to that of the water. Then, such volume may be sealed in the manufacturing process.

Before being worn, the inner mask volume 9 is filled with a suitable liquid, e.g. or physiological solution. This operation is usually carried out holding the mask with the back side thereof in upward position, and filling it by simply pouring a physiological solution.

While the mask is in this position, the visage is placed on the mask and the mask is laced to the user's head, letting the exceeding physiological solution to flow out.

To this purpose, means for filling up the inner volume of the mask may be provided (not shown). For instance two small holes through the usually flexible wall of the frame 1 A, commonly made of a rubber or silicone material, may be formed at the top side of the frame 1A. One of the holes may be engaged by the needle of an injection device, while the other one allows the air to escape. In a simpler embodiment, only one hole may be provided to insert a needle, the air escaping from the rim of the frame 1 A.

Once the mask is worn and internally flooded, the user can dive and both the first chamber 5 and the second chamber 7 are flooded by water through the respective apertures 5A and 7A, respectively.

In this condition, since each meniscus 3B has null optical power and all lenses are immersed in a liquid, the whole optical system has a power equal to the single converging lens 3A immersed in water on a side and, on the side of user's eye, in the physiological solution. It is important to remind that the biconvex, or plano/convex, lens 3A has been optically designed to correct the underwater vision in the mentioned situation.

It is noted that the physiological solution and the water, i.e. fresh water or the sea water, have the same refractive index, i.e. about 1,3 in the visible light wavelength range.

Beside, at the re-emersion of user's head in erect posture, only the first chamber 5 is emptied, because the water flows out through the apertures 5A, while the second chamber 7 remains filled with water, forming a diverging water lens between the meniscuses 3B.

The curvature of meniscuses 3B is such that this water lens compensates with its power the optical power of the converging lens 3A in air, allowing a correct vision with the mask in air.

It is noted that the position of the diverging lenses and the position of the converging lenses may be exchanged, keeping a fillable and emptiable chamber in each pair of diverging-converging lenses. Such an arrangement may either reduce the curvature needed for the converging lens surfaces or allow the use of a material having a minor refractive index.

To the above described diving mask a man skilled in the art, to achieve further and contingent demands, may introduce several further changes and variations, however all falling within the protection scope of the present invention, as defined by the annexed claims.

## Claims

1. Diving mask (1) for underwater and air vision, apt to be worn at user's eyes and defining an inner volume (9) which, when in use, contains a suitable liquid to compensate the external pressure, comprising:
• a first converging optical system (3A) to compensate the refractive effect of said suitable liquid inside said inner volume (9),
**characterized in that** it further comprises:
• a second optical system (3B, 7), placed at said first optical system (3A), having a refractive index substantially corresponding to that of said liquid so as to be neutral when immersed, but having a diverging effect in air, so as to compensate in air the converging effect of said first converging optical system (3A).

2. Diving mask according to claim 1, wherein said second optical system include a diverging lens for each eye, carried out by two meniscuses (3B) defining a further volume (7) apt to be filled by water, the overall shape of the volume of water encased by said meniscuses (3B) creating in air a diverging refractive effect compensating the converging effect of the first optical system.

3. Diving mask (1) according to claim 2, wherein said second optical system is provided with means for flooding (7A) the volume (7) determined by said two meniscuses (3B).

4. Diving mask (1) according to claim 3, wherein said means for flooding comprises at least one hole (7A) located at the top of a peripheral wall between said meniscuses (3B), the arrangement and the size of the at least one hole (7A) being designed so as to allow the flooding of said volume (7) when the mask (1) is plunged in water, but preventing the emptying thereof when the mask (1) is emerged.

5. Diving mask (1) according to claim 4, wherein said means for flooding comprises at least one hole placed at a bottom portion of said peripheral wall operates as a check valve so as to allow the flooding but avoiding the emptying.

6. Diving mask (1) according to any of the preceding claims, wherein said first optical system comprises one converging lens (3A) for each eye.

7. Diving mask (1) according to claim 6, wherein the converging lens (3A) is made of a high refractive index optical material, preferably a polymer.

8. Diving mask (1) according to claim 7, wherein the high refractive index optical polymer has a refractive index greater than 1,6 and possibly greater than 1,7.

9. Diving mask (1) according to any of the preceding claims, wherein said second optical systems comprises a chamber (5) apt to be flooded when the mask is plunged and apt to be emptied when the mask is emerged, said chamber (5) being arranged so as to separe said diverging and said converging lenses (7, 3).

10. Diving mask (1) according to claims 2, 6 and 9, wherein said chamber (5) is defined, at opposite sides, by the lenses (3A) of the first optical system and by the meniscus (3B) of the second optical system facing the first optical system.

11. Diving mask (1) according to claim 9 or 10, wherein said chamber (5) is provided with means for flooding and emptying when the mask (1) is respectively plunged in water and emerged.

12. Diving mask (1) according to claim 11, wherein said means for flooding and emptying comprises holes (5A) at the peripheral wall of this chamber (5).

13. Diving mask (1) according to any of claims 10 to 12, wherein, for each eye, one converging lens (3A) and a floodable diverging optical assembly (3B, 7) are provided, with two different separating chambers (5) therebetween in a substantial goggle arrangement, each of the optical components being aligned along the optical axis of vision of each eye.

14. Diving mask (1) according to any of the preceding claims, including means for filling said inner volume (9) with a suitable liquid, e.g. physiological solution.

## Patentansprüche

1. Tauchmaske (1) für Unterwasser- und Luftsicht, geeignet, um an den Augen des Nutzers getragen zu werden und ein inneres Volumen (9) definierend, welches, wenn bei Benutzung, eine geeignete Flüssigkeit enthält, um den Außendruck auszugleichen, umfassend:
- ein erstes sammelndes optisches System (3A), um den Brechungseffekt der geeigneten Flüssigkeit in dem inneren Volumen (9) auszugleichen,
**dadurch gekennzeichnet, dass** die Maske weiter umfasst:
- ein zweites optisches System (3B, 7), das an dem ersten optischen System (3A) angeordnet ist und das einen Brechungsindex besitzt, der im Wesentlichen zu dem der Flüssigkeit korrespondiert, um neutral zu sein, wenn eingetaucht, aber einen streuenden Effekt in Luft aufzuweisen, um in Luft den sammelnden Effekt des ersten sammelnden optischen Systems (3A) zu kompensieren.

2. Tauchmaske gemäß Anspruch 1, wobei das zweite optische System eine Streulinse für jedes Auge aufweist, ausgeführt als zwei Menisken (3B) die ein weiteres Volumen (7) definieren, das geeignete ist um mit Wasser gefüllt zu werden, wobei die Gesamtform des Volumens von Wasser, das durch die Menisken (3B) eingeschlossen ist, in Luft einen streuenden Brechungseffekt erzeugt, der den sammelnden Effekt des ersten optischen Systems kompensiert.

3. Tauchmaske (1) gemäß Anspruch 1, wobei das zweite optische System mit Mitteln zum Fluten (7A) des Volumens (7), das durch die beiden Menisken (3B) bestimmt ist, versehen ist.

4. Tauchmaske (1) gemäß Anspruch 3, wobei die Mittel zum Fluten zumindest ein Loch (7A) umfassen, das an der Oberseite einer peripherischen Wand zwischen den Menisken (3B) angeordnet ist, die Anordnung und die Größe des mindestens einen Lochs (7A) so ausgelegt ist, um das Fluten des Volumen (7) zu erlauben, wenn die Maske (1) in Wasser getaucht wird, aber das Entleeren desselben verhindert, wenn die Maske (1) herausgenommen wird.

5. Tauchmaske (1) gemäß Anspruch 4, wobei die Mittel zum Fluten zumindest ein Loch umfassen, das an einem unteren Bereich der peripherischen Wand angeordnet ist und als ein Absperrventil fungiert, um das Fluten zu erlauben aber das Entleeren zu verhindern.

6. Tauchmaske (1) gemäß einem der vorstehenden Ansprüche, wobei das erste optische System eine Sammellinse (3A) für jedes Auge umfasst.

7. Tauchmaske (1) gemäß Anspruch 6, wobei die Sammellinse (3A) aus einem optischen Material mit hohem Brechungsindex, vorzugsweise aus Polymer, hergestellt ist.

8. Tauchmaske (1) gemäß Anspruch 7, wobei das optische Polymer mit hohem Brechungsindex einen Brechungsindex aufweist, der größer als 1,6 und möglichst größer als 1,7 ist.

9. Tauchmaske (1) nach einem der vorstehenden Ansprüche, wobei das zweite optische System eine Kammer (5) umfasst, die geeignet ist geflutet zu werden, wenn die Maske eingetaucht wird und geeignet ist entleert zu werden, wenn die Maske herausgenommen wird, wobei die Kammer (5) so angeordnet ist, um die Streu- und die Sammellinsen (7, 3) zu trennen.

10. Tauchmaske (1) gemäß Anspruch 2, 6 und 9, wobei die Kammer (5) an
gegenüberliegenden Seiten definiert ist durch die Linsen (3A) des ersten optischen Systems und durch den Meniskus (3B) des zweiten optischen Systems, der dem ersten optischen System zugewandt sind.

11. Tauchmaske (1) gemäß Anspruch 9 oder 10, wobei die Kammer (5) mit Mitteln zum Fluten und zum Entleeren, wenn die Maske (1) eingetaucht beziehungsweise herausgenommen wird, versehen ist.

12. Tauchmaske (1) gemäß Anspruch 11, wobei die Mittel zum Fluten und Entleeren Löcher (5A) an der peripherischen Wand dieser Kammer (5) umfassen.

13. Tauchmaske (1) gemäß einem der Ansprüche 10 bis 12, wobei für jedes Auge, jeweils eine Sammellinse (3A) und eine flutbare streuende optische Anordnung (3B, 7) mit zwei unterschiedlichen Trennkammern (5) dazwischen in einer im Wesentlichen Sichtbrillen-Anordnung vorgesehen ist, wobei jede der optischen Komponenten entlang der optischen Blickachse jedes Auges ausgerichtet ist.

14. Tauchmaske (1) gemäß einem der vorstehenden Ansprüche, die Mittel zum Füllen des inneren Volumens (9) mit einer geeigneten Flüssigkeit, beispielsweise einer physiologischen Lösung, aufweist.

## Revendications

1. Masque de plongée (1) pour vision sous l'eau et dans l'air, adapté pour être porté sur les yeux d'un utilisateur et définissant un volume interne (9) lequel, lorsqu'il est utilisé, contient un liquide approprié pour compenser la pression externe, comportant :
• un premier système optique convergent (3A) pour compenser l'effet de réfraction dudit liquide approprié à l'intérieur dudit volume interne (9),
**caractérisé en ce qu'**il comporte en outre :
• Un second système optique (3B, 7), placé au niveau dudit premier système optique (3A), ayant un indice de réfraction correspondant sensiblement à celui dudit liquide de manière à être neutre lorsqu'il est immergé, mais ayant un effet divergent dans l'air, de manière à compenser dans l'air l'effet convergent dudit premier système optique convergent (3A).

2. Masque de plongée selon la revendication 1, dans lequel ledit second système optique comprend une lentille divergente pour chaque oeil, réalisée par deux ménisques (3B) définissant un volume supplémentaire (7) susceptible d'être rempli d'eau, la forme globale du volume d'eau enveloppé par lesdits ménisques (3B) créant dans l'air un effet de réfraction divergent compensant l'effet convergent du premier système optique.

3. Masque de plongée (1) selon la revendication 2, dans lequel ledit second système optique est pourvu de moyens d'inondation (7A) du volume (7) déterminé par lesdits deux ménisques (3B).

4. Masque de plongée (1) selon la revendication 3, dans lequel lesdits moyens d'inondation comportent au moins un trou (7A) situé au sommet d'une paroi périphérique entre lesdits ménisques (3B), l'agencement et la taille du au moins un trou (7A) étant conçus de manière à permettre l'inondation dudit volume (7) lorsque le masque (1) est plongé dans l'eau, mais empêchant de vider celui-ci lorsque le masque (1) est émergé.

5. Masque de plongée (1) selon la revendication 4, dans lequel lesdits moyens d'inondation comportent au moins un trou placé dans une partie inférieure de ladite paroi périphérique qui fonctionne comme un clapet anti-retour afin de permettre le remplissage mais empêchant la vidange.

6. Masque de plongée (1) selon l'une quelconque des revendications précédentes, dans lequel ledit premier système optique comporte une lentille convergente (3A) pour chaque oeil.

7. Masque de plongée (1) selon la revendication 6, dans lequel la lentille convergente (3A) est fabriquée dans un matériau optique ayant un indice de réfraction élevé, de préférence un polymère.

8. Masque de plongée (1) selon la revendication 7, dans lequel le polymère optique ayant un indice de réfraction élevé a un indice de réfraction supérieur à 1,6 et, éventuellement, supérieur à 1,7.

9. Masque de plongée (1) selon l'une quelconque des revendications précédentes, dans lequel ledit second système optique comporte une chambre (5) pouvant être inondée lorsque le masque est plongé, et pouvant être vidée lorsque le masque est émergé, ladite chambre (5) étant agencée de manière à séparer lesdites lentilles divergente et convergente (7, 3).

10. Masque de plongée (1) selon les revendications 2, 6 et 9, dans lequel ladite chambre (5) est définie, sur des côtés opposés, par les lentilles (3A) du premier système optique et par le ménisque (3B) du second système optique faisant face au premier système optique.

11. Masque de plongée (1) selon la revendication 9 ou 10, dans lequel ladite chambre (5) est pourvue de moyens d'inondation et de vidange lorsque le masque (1) est plongé dans l'eau et respectivement émergé.

12. Masque de plongée (1) selon la revendication 11, dans lequel lesdits moyens d'inondation et de vidange comportent des trous (5A) dans la paroi périphérique de cette chambre (5).

13. Masque de plongée (1) selon l'une quelconque des revendications 10 à 12, dans lequel, pour chaque oeil, une lentille convergente (3A) et un ensemble optique divergent inondable (3B, 7) sont munis de deux chambres de séparation (5) différentes placées entre eux dans un agencement sensiblement de lunette de protection, chacun des éléments optiques étant aligné le long de l'axe optique de vision de chaque oeil.

14. Masque de plongée (1) selon l'une quelconque des revendications précédentes, incluant des moyens pour remplir ledit volume interne (9) avec un liquide approprié, par exemple une solution physiologique.
